# EUROPEAN PATENT SPECIFICATION

(11) **EP 1 060 964 B1**
(45) Date of publication and mention of the grant of the patent: **17.11.2004**
(21) Application number: 00112817.2
(22) Date of filing: 16.06.2000
(51) Int. Cl.: B60R 25/00

(54) **Perfected vehicle antitheft device**
Kraftfahrzeugdiebstahlsicherung
Dispositif anti-vol pour véhicule à moteur

(30) Priority: 18.06.1999 IT MI990406 U
(43) Date of publication of application: 20.12.2000
(73) Proprietor: Piciollo, Brunello, 20020 Busto Garolfo (IT); Formato, Antonio, 20100 Milano (IT)
(72) Inventor: Piciollo, Brunello, 20020 Busto Garolfo (IT); Formato, Antonio, 20100 Milano (IT)
(74) Representative: Cerbaro, Elena, Dr.

(56) References cited:
- EP-A- 0 603 960
- GB-A- 2 255 060
- GB-A- 2 281 728
- US-A- 1 582 498
- US-A- 5 282 373

## Description

The present invention relates to a vehicle antitheft device designed, unlike similar known devices, to lock not only the brake and clutch pedals, but also the accelerator pedal, and which at the same time is compact, fast and easy to use, and cheap and easy to produce.

Mechanical antitheft devices for locking the pedals of a vehicle come in numerous types, and, generally speaking, provide for locking the brake and clutch pedals of the vehicle by means of jaws, which are gripped and locked about the pedal levers to prevent movement and, hence, operation of the pedals. A good example of this type of antitheft device is described in European Patent n. 603960, though the same operating principle is used in different ways in various other known devices.

A major drawback of antitheft devices of the above type, however, lies in their only locking the brake and clutch pedals of the vehicle, leaving the accelerator pedal unimpeded. As a result, even with the brake and clutch pedals locked, the vehicle is still in a condition to be driven, provided certain precautions are taken : clutch pedals locked, the vehicle is still in a condition to be driven, provided certain precautions are taken : once the engine is started, it is possible to accelerate using the accelerator pedal (not locked by the antitheft device), change gears carefully without using the clutch, and brake using the parking brake.

Though the obvious solution would be to provide an additional jaw for also locking the accelerator pedal, this would result in an excessively bulky device, would complicate both production and operation, and would greatly increase production cost.

It is an object of the present invention to provide a vehicle antitheft device designed to eliminate the aforementioned drawback typically associated with known devices, and which, at the same time, is compact, easy to use, and cheap and easy to produce.

According to the present invention, there is provided an antitheft device for vehicles, of the mechanical pedal-locking type, as claimed by claim 1.

Unlike known devices, the antitheft device according to the invention therefore prevents operation, not only of the brake and clutch pedals, but also the accelerator pedal. This being achieved in a straightforward manner, the antitheft device according to the invention is therefore cheap and easy to produce, even by adapting existing devices, and is also compact and fast and easy to use.

A non-limiting embodiment of the present invention will be described by way of example with reference to the accompanying drawings, in which:
Figure 1 shows a schematic view in perspective of an antitheft device in accordance with the present invention and in the rest position;
Figure 2 shows the Figure 1 antitheft device in the work position;
Figure 3 shows a partly sectioned top plan view of the Figure 2 work position;
Figure 4 shows a section along line IV-IV in Figure 3;

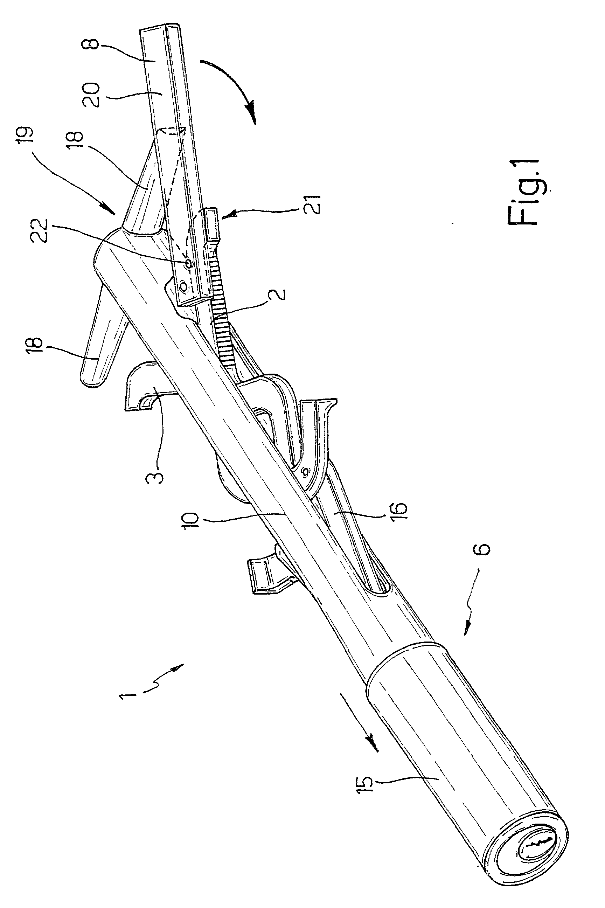

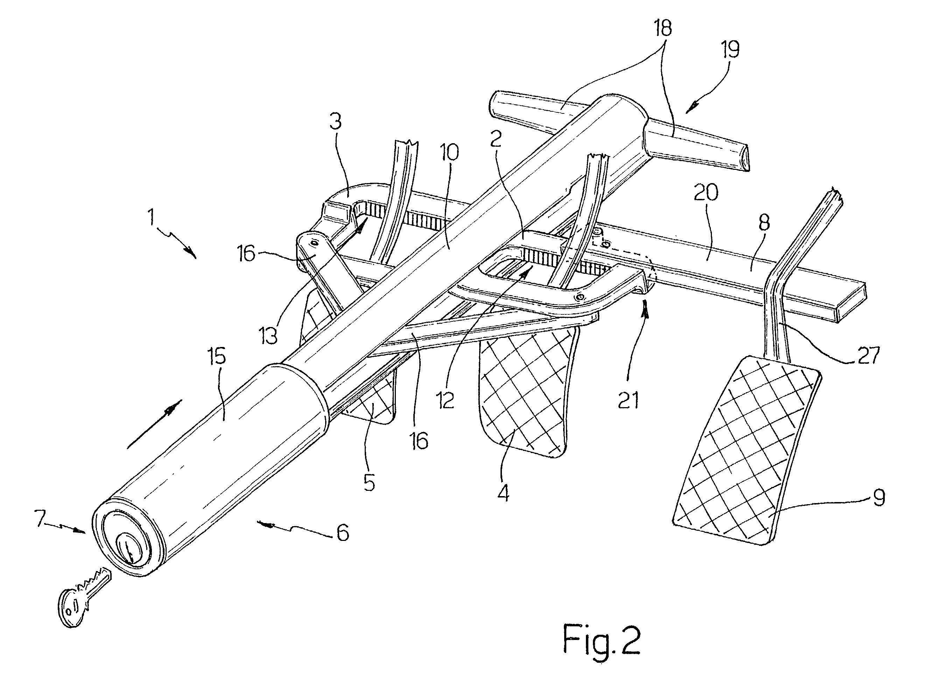

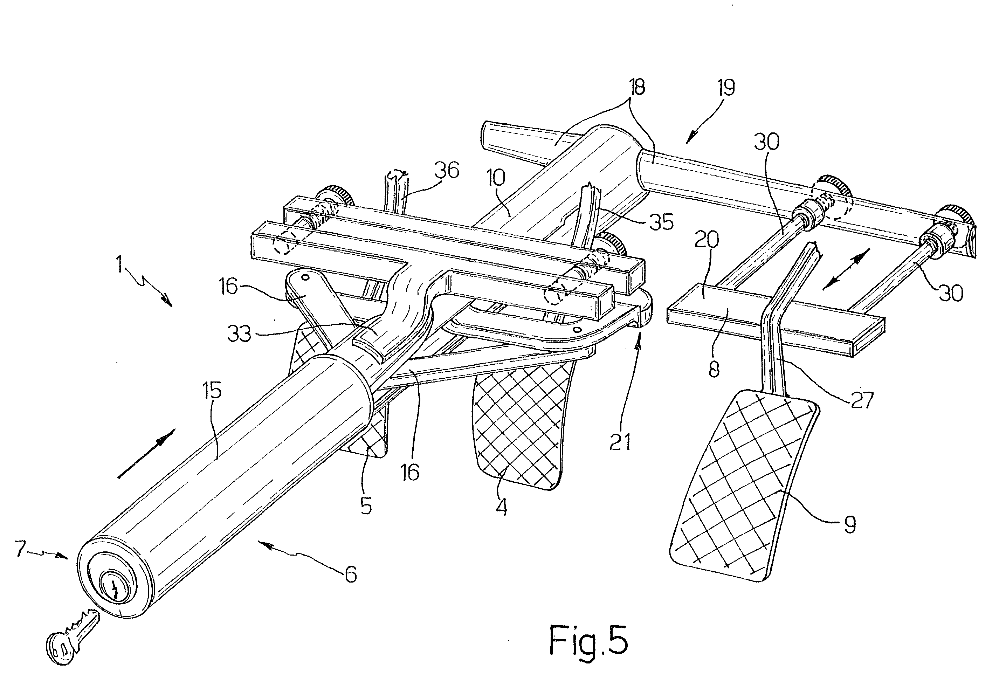

Figure 5 shows a schematic view of a variation of the Figure 1 antitheft device, which is not part of the invention as claimed. mechanically locking the vehicle pedals. Device 1 substantially comprises a first and a second gripping member 2, 3 movable with respect to each other and for gripping a brake pedal 4 and a clutch pedal 5 of the vehicle; control means 6 for alternatively moving gripping members 2, 3 from an open position (Figure 1) to a closed position (Figure 2) wherein gripping members 2, 3 engage pedals 4 and 5; and locking means 7 for maintaining gripping members 2, 3 in the closed position. Purely by way of example, the invention will be described herein with reference to a known antitheft device described in detail in the aforementioned European Patent n. 603960. The object of the present invention, in fact, is substantially to improve any known antitheft device of the above general type, by providing stop means 8 designed to rest against the accelerator pedal 9 of the vehicle (Figure 2) when gripping means 2, 3 are set to the closed position, as explained in detail later on.

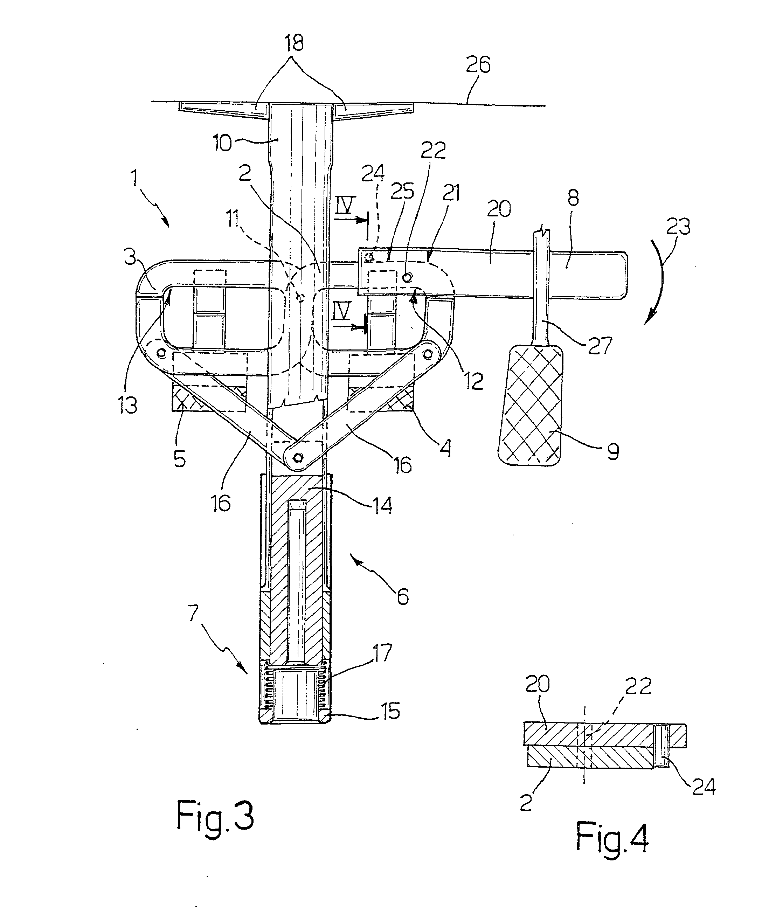

In the non-limiting example shown, gripping members 2, 3 are defined by respective S-shaped jaws hinged by a pin 11 (Figure 3) to each other and to a supporting structure 10 - e.g. defined by a straight tubular bar - so as to form a double grip defining, in the closed position, a first and second grip seat 12, 13 for respectively engaging pedals 4 and 5. As described in European Patent n. 603960 (and therefore not described here for the sake of simplicity), control means 6 comprise a rod 14 inserted in sliding manner inside bar 10 and fixed to a sleeve 15; rod 14 is connected to jaws 2, 3 by levers 16 hinged to each other and to rod 14; a return spring 17 is interposed between sleeve 15 and bar 10; at the opposite end to sleeve 15, bar 10 terminates with two feet 18 perpendicular to bar 10 and defining an end portion 19 of bar 10 itself; and locking means 7 are of the (known) lock and key type.

In the preferred embodiment shown in Figures 1 to 4, stop means 8 comprise a stop member 20 carried integrally by jaw 2. In the example shown, stop member 20 is defined by an arm projecting laterally from a free end 21 of jaw 2, on the opposite side with respect to grip seats 12, 13. In a preferred embodiment, arm 20 is defined by a metal bar fixed permanently to jaw 2: arm 20 may, for example, be welded to or formed in one piece with jaw 2, so as to form an integral, appropriately elongated, contoured end portion of jaw 2.

In one possible variation shown in Figures 3 and 4, arm 20 is hinged by a pin 22 to jaw 2 so as to rotate in a predetermined direction (shown by arrow 23 in Figure 3) with respect to jaw 2, to selectively assume a work position (Figure 3) wherein arm 20 is substantially aligned with and forms a longitudinal extension of jaw 2, and a collapsed position (not shown) wherein arm 20 is rotated towards jaw 2. In this variation, device 1 comprises limit stop means 24 for limiting rotation of arm 20 with respect to jaw 2 in the opposite direction to predetermined rotation direction 23, and so preventing arm 20 from rotating, with respect to jaw 2 and in the opposite direction to predetermined rotation direction 23, beyond a given limit coincident with the work position of the arm. For example, the limit stop means for limiting rotation of arm 20 with respect to jaw 2 are defined by a pin 24 projecting perpendicularly from arm 20 and eccentric with respect to pin 22, so as to rest against a side 25 of jaw 2.

Device 1 operates as follows with jaws 2, 3 in the open position (Figure 1), device 1 is positioned with bar 10 between pedals 4, 5 (brake and clutch), and with feet 18 resting on an end wall 26 of the vehicle (Figure 3) defined by the vehicle floor; using control means 6, jaws 2, 3 are closed (Figure 2) so that pedals 4, 5 are engaged inside grip seats 12, 13; and, at the same time, arm 20 (whether fixed permanently to or rotatable with respect to jaw 2) is moved, by the movement of jaw 2, into the work position resting against accelerator pedal 9, and in particular against a lever 27 of the accelerator pedal. At this point, pedal 9 is disabled, by being prevented from being pressed towards floor 26 of the vehicle by the presence of arm 20 fixed integrally to jaw 2, or the downward rotation of which is prevented by pin 24.

In the Figure 5 a variation is described which is not part of the invention as claimed, in which any details similar to or identical with those already described are indicated using the same numbering system, stop means 8 are carried directly by supporting structure 10, as opposed to one of the gripping members. More specifically, stop means 8 comprise a stop member 20 defined by a bar connected integrally by two parallel rods 30 to one of feet 18 (possibly lengthened up to pedal 9). To enable use on different vehicle models, rods 30 may comprise adjusting means 31 for adjusting the distance between stop member 20 and foot 18. Adjusting means 31 may be of any known type, and may be defined, for example, by adjusting screws (shown only schematically in Figure 5) located on the opposite side of foot 18 with respect to stop member 20, so as to be inaccessible with device 1 in the work position.

Device 1 may also comprise antirotation means 32 for preventing device 1, in use, from being rotated about end portion 19 - which, with feet 18 pressed against floor 26 of the vehicle, defines a fulcrum - and so preventing accelerator pedal 9 from being detached slightly from stop member 20. In the non-limiting example shown in Figure 5, antirotation means 32 comprise a support 33 connected integrally (e.g. welded) to sleeve 15 and projecting axially towards end portion 19; and a crossbar 34 carried by support 33 and which, with device 1 in the work position (i.e. with jaws 2, 3 closed about pedals 4, 5), rests on pedals 4, 5, and in particular on respective levers 35, 36 of the pedals. When pedals 4, 5 are gripped inside respective grip seats 12, 13, bar 34 acts on levers 35, 36 of pedals 4, 5 in the opposite direction to that in which stop member 20 acts on lever 27 of pedal 9, thus preventing rotation of device 1 as a whole with respect to the fulcrum defined by end portion 19. Antirotation means 32 may also comprise adjusting means of known type for adjusting the distance between bar 34 and support 33 and so adapting device 1 to different vehicles: for example, bar 34 is formed by two parallel bars 34a, 34b: bar 34a is connected integrally to support 33 and bar 34b is connected to bar 34a by means of screw adjusting means 38 of known type.

## Claims

1. An antitheft device (1) for vehicles, of the mechanical pedal-locking type, comprising a supporting structure (10), which rests, by means of at least an end portion (19), on an end wall (26) of the vehicle, and supports a first (2) and a second (3) gripping member movable with respect to each other and for gripping a first (4) and a second (5) pedal of the vehicle; control means (6) for alternatively moving said gripping members (2, 3) from an open position to a closed position wherein said gripping members (2, 3) engage said first and said second pedal (4, 5); and locking means (7) for maintaining said gripping members (2, 3) in said closed position; said gripping members (2, 3) being defined by respective jaws hinged to each other and to said supporting structure (10) by a pin so as to form a double grip;
the antitheft device being **characterized by** also comprising at least a stop member (20) defined by an arm (20) which projects laterally from a free end (21) of a first (2) of said jaws and movable integrally with said first jaw (2) to rest against a third pedal (9) of the vehicle and to be interposed between said third pedal (9) and said end wall (26) of the vehicle when said gripping members (2, 3) are set to said closed position.

2. An antitheft device as claimed in Claim 1, **characterized in that** said gripping members (2, 3) define, in said closed position, a first (12) and a second (13) grip seat; said stop member (20) being carried integrally by said first gripping member (2) and projecting laterally from said first gripping member (2), on the opposite side to said grip seats (12, 13).

3. An antitheft device as claimed in Claim 1 or 2, **characterized in that** said arm (20) is defined by a metal bar fixed permanently to said first jaw (2).

4. An antitheft device as claimed in Claim 1 or 2, **characterized in that** said arm (20) is hinged to said first jaw (2) so as to rotate in a predetermined rotation direction (23) with respect to said first jaw (2) to selectively assume a work position wherein said arm (20) is substantially aligned with and forms a longitudinal extension of said first jaw (2), and a collapsed position wherein said arm (20) is rotated towards said first jaw (2).

5. An antitheft device as claimed in Claim 4, **characterized by** also comprising limit stop means (24) for limiting the rotation of said arm (20) with respect to said first jaw (2) in the opposite direction to said predetermined rotation direction (23) and so preventing said arm (20) from rotating, with respect to said first jaw (2) and in the opposite direction to said predetermined rotation direction (23), beyond a predetermined limit coincident with said work position.

6. An antitheft device as claimed in one of the foregoing Claims, **characterized by** also comprising antirotation means (32) which, when said gripping members (2, 3) are in said closed position, rest on said first and said second pedal (4, 5) in the opposite direction to that in which said stop means (8) rest on said third pedal (9), so as to prevent rotation of said antitheft device (1) with respect to a fulcrum defined by said end portion (19) of the supporting structure (10).

## Patentansprüche

1. Fahrzeug-Diebstahlsicherungsvorrichtung (1) des mechanischen Pedalverriegelungstyps, mit
einer Halterungsstruktur (10), die mittels mindestens einem Endabschnitt (19) an/auf einer Endwand (26) des Fahrzeugs ruht und ein erstes (2) und ein zweites (3) Greifelement trägt, welche in Bezug aufeinander bewegbar sind und zum Greifen eines ersten (4) und eines zweiten (5) Pedals des Fahrzeugs dienen,
Steuermitteln (6) zum alternierenden Bewegen der Greifelemente (2,3) von einer offenen Position zu einer geschlossenen Position, in der die Greifelemente (2,3) mit dem ersten und dem zweiten Pedal (4,5) in Eingriff stehen, und
Verriegelungsmitteln (7) zum Halten der Greifelemente (2,3) in der geschlossenen Position,
wobei die Greifelemente (2,3) durch jeweilige Klauen festgelegt sind, die miteinander und mit der Halterungsstruktur (10) über einen Stift gelenkig derart verbunden sind, dass sie einen Doppelgriff bilden,
wobei die Diebstahlsicherungsvorrichtung **dadurch gekennzeichnet ist, dass** sie auch mindestens ein Anschlagelement (20) umfasst, das durch einen Arm (20) festgelegt ist, der lateral von einem freien Ende (21) einer ersten (2) der Klauen vorsteht und integral mit der ersten Klaue (2) bewegbar ist, um gegen ein drittes Pedal (9) des Fahrzeugs anzuliegen und zwischen das dritte Pedal (9) und die Endwand (26) des Fahrzeugs eingefügt zu sein, wenn die Greifelemente (2,3) in die geschlossene Position versetzt sind.

2. Diebstahlsicherungsvorrichtung nach Anspruch 1, **dadurch gekennzeichnet, dass** die Greifelemente (2,3) in der geschlossenen Position einen ersten (12) und einen zweiten (13) Greifsitz festlegen, wobei das Anschlagelement (20) integral von dem ersten Greifelement (2) getragen wird und lateral von dem ersten Greifelement (2) an der den Greifsitzen (12,13) gegenüberliegenden Seite vorsteht.

3. Diebstahlsicherungsvorrichtung nach Anspruch 1 oder 2, **dadurch gekennzeichnet, dass** der Arm (20) durch eine permanent an der ersten Klaue (2) befestigte Metallstange bzw. -schiene festgelegt ist.

4. Diebstahlsicherungsvorrichtung nach Anspruch 1 oder 2, **dadurch gekennzeichnet, dass** der Arm (20) mit der ersten Klaue (2) derart gelenkig verbunden ist, dass er sich in einer vorbestimmten Drehrichtung (23) in Bezug auf die erste Klaue (2) dreht, um selektiv eine Arbeitsposition, in der der Arm (20) im wesentlichen mit einer Längserstreckung der ersten Klaue (2) ausgerichtet ist und diese bildet, und eine zusammengeklappte Position einzunehmen, in der der Arm (20) zu der ersten Klaue (2) hin gedreht ist.

5. Diebstahlsicherungsvorrichtung nach Anspruch 4, **dadurch gekennzeichnet, dass** sie auch Begrenzungs-Anschlagmittel (24) zum Begrenzen der Drehung des Arms (20) in Bezug auf die erste Klaue (2) in der entgegengesetzten Richtung zu der vorbestimmten Drehrichtung (23) aufweist, womit verhindert wird, dass sich der Arm (20) in Bezug auf die erste Klaue (2) und in der entgegengesetzten Richtung zu der vorbestimmten Drehrichtung (23) über ein mit der Arbeitsposition koinzidierendes vorbestimmtes Limit hinaus dreht.

6. Diebstahlsicherungsvorrichtung nach einem der vorangehenden Ansprüche, **dadurch gekennzeichnet, dass** sie auch Anti-Drehmittel (32) umfasst, die, wenn sich die Greifelemente (2,3) in der geschlossenen Position befinden, an dem ersten und dem zweiten Pedal (4,5) in der entgegengesetzten Richtung zu derjenigen, in der das Anschlagmittel (8) an dem dritten Pedal (9) anliegt, anliegen, so dass eine Drehung der Diebstahlsicherungsvorrichtung (1) in Bezug auf einen durch den Endabschnitt (19) der Halterungsstruktur (10) festgelegten Drehpunkt verhindert wird.

## Revendications

1. Dispositif anti-vol (1) pour véhicules, du type à blocage de pédale mécanique, comprenant une structure de support (10), qui repose au moyen d'au moins une partie d'extrémité (19) sur une paroi d'extrémité (26) du véhicule, et supporte un premier (2) et un second (3) éléments de prise mobiles l'un par rapport à l'autre et pour saisir une première (4) et une seconde (5) pédales du véhicule ; des moyens de commande (6) pour déplacer en alternance lesdits éléments de prise (2, 3) d'une position ouverte à une position fermée, dans lequel lesdits éléments de prise (2, 3) mettent en prise ladite première et ladite seconde pédales (4, 5) ; et des moyens de verrouillage (7) pour maintenir lesdits éléments de prise (2, 3) dans ladite position fermée ; lesdits éléments de prise (2, 3) étant définis par des mâchoires respectives articulées l'une par rapport à l'autre et à ladite structure de support (10) par une broche pour former une double prise ;
le dispositif anti-vol étant **caractérisé en ce qu'**il comprend également au moins un élément de butée (20) défini par un bras (20) qui fait saillie de manière latérale à partir d'une extrémité libre (21) d'une première (2) desdites mâchoires et mobile de manière solidaire avec ladite première mâchoire (2) pour reposer contre une troisième pédale (9) du véhicule et être interposée entre ladite troisième pédale (9) et ladite paroi d'extrémité (26) du véhicule lorsque lesdits éléments de prise (2, 3) sont placés dans ladite position fermée.

2. Dispositif anti-vol selon la revendication 1, **caractérisé en ce que** lesdits éléments de prise (2, 3) définissent, dans ladite position fermée, un premier (12) et un second (13) sièges de prise ; ledit élément de butée (20) étant supporté de manière solidaire par ledit premier élément de prise (2) et faisant saillie de manière latérale à partir dudit premier élément de prise (2), sur le côté opposé auxdits sièges de prise (12, 13).

3. Dispositif anti-vol selon la revendication 1 ou 2, **caractérisé en ce que** ledit bras (20) est défini par une barre de métal fixée en permanence sur ladite première mâchoire (2).

4. Dispositif anti-vol selon la revendication 1 ou 2, **caractérisé en ce que** ledit bras (20) est articulé à ladite première mâchoire (2) afin de tourner dans une direction de rotation prédéterminée (23) par rapport à ladite première mâchoire (2) pour prendre de manière sélective une position de travail dans laquelle ledit bras (20) est sensiblement aligné avec et forme une extension longitudinale de ladite première mâchoire (2), et une position repliée dans laquelle ledit bras (20) tourne vers ladite première mâchoire (2).

5. Dispositif anti-vol selon la revendication 4, **caractérisé en ce qu'**il comprend en outre des moyens de butée de limite (24) pour limiter la rotation dudit bras (20) par rapport à ladite première mâchoire (2) dans la direction opposée à ladite direction de rotation prédéterminée (23) et ainsi pour empêcher ledit bras (20) de tourner, par rapport à ladite première mâchoire (2) et dans la direction opposée à ladite direction de rotation prédéterminée (23), au-delà d'une limite prédéterminée qui coïncide avec ladite position de travail.

6. Dispositif anti-vol selon l'une quelconque des revendications précédentes, **caractérisé en ce qu'**il comprend également des moyens d'antirotation (32) qui, lorsque lesdits moyens de prise (2, 3) sont dans ladite position fermée, reposent sur ladite première et ladite seconde pédales (4, 5) dans la direction opposée à celle dans laquelle lesdits moyens de butée (8) reposent sur ladite troisième pédale (9), afin d'empêcher la rotation dudit dispositif anti-vol (1) par rapport à un pivot défini par ladite partie d'extrémité (19) de la structure de support (10).
